Europäisches Patentamt

European Patent Office

Office européen des brevets

(11) Veröffentlichungsnummer: **0 296 492 B1**

# (12) EUROPÄISCHE PATENTSCHRIFT

(45) Veröffentlichungstag der Patentschrift: **25.03.92**

(21) Anmeldenummer: **88109637.4**

(22) Anmeldetag: **16.06.88**

(51) Int. Cl.⁵: **C08F 8/06**

(54) Verfahren zur Oxidation von Polyethylen.

(30) Priorität: **25.06.87 DE 3720953**

(43) Veröffentlichungstag der Anmeldung:
**28.12.88 Patentblatt 88/52**

(45) Bekanntmachung des Hinweises auf die
Patenterteilung:
**25.03.92 Patentblatt 92/13**

(84) Benannte Vertragsstaaten:
**AT BE DE FR GB NL**

(56) Entgegenhaltungen:
**GB-A- 1 087 915**
**US-A- 3 293 112**
**US-A- 4 459 388**

**CHEMICAL ABSTRACTS, Band 89, Nr. 10,
September 1978, Seite 28, Zusammenfassung Nr. 75883m, Columbus, Ohio, US**

(73) Patentinhaber: **BASF Aktiengesellschaft
Carl-Bosch-Strasse 38
W-6700 Ludwigshafen(DE)**

(72) Erfinder: **Schuster, Ludwig, Dr.
Weinheimer Strasse 44
W-6703 Limburgerhof(DE)**
Erfinder: **Hettche, Albert, Dr.
Kleiststrasse 12
W-6717 Hessheim(DE)**
Erfinder: **Liedy, Werner, Dr.
Schifferstadter Strasse 4
W-6701 Hochdorf-Assenheim(DE)**
Erfinder: **Weiss, Stefan, Dr.
Carl-Beck-Strasse 46
W-6903 Neckargemuend(DE)**
Erfinder: **Ehemann, Leo
Goennheimer Strasse 8
W-6701 Roedersheim-Gronau(DE)**

**Beschreibung**

Die Erfindung betrifft ein Verfahren zur Herstellung von oxidierten Polyethylenen mit Säurezahlen von 10 bis 40 mg KOH/g durch Oxidation von feinteiligem Polyethylen hoher Dichte bei Temperaturen unterhalb des Erweichungspunkts des Polyethylens und oberhalb 100°C mit einem Oxidationsgas aus Luft und/oder Sauerstoff, wobei Polyethylene eingesetzt werden, denen 0,015 bis 0,5 Gew.% einer radikalbildenden organischen Verbindung beigemischt sind.

Bei derartigen Verfahren werden oxidierte Polyethylene erhalten, die als Gleitmittel bei der Extrusion von Polyvinylchlorid von Interesse sind.

Es ist bekannt, daß man Polyethylene durch die Einwirkung von freiem Sauerstoff bei erhöhter Temperatur oxidieren kann, wobei man unter Kettenabbau oxidierte Produkte erhält. In den US-Patenten 3 293 112, 3 322 711, 4 459 388 und im GB-Patent 1 087 915 ist diese Arbeitsweise beschrieben. Die Oxidation wird dabei im allgemeinen bei Temperaturen knapp unterhalb des Schmelzpunktes des Polyethylens durchgeführt, um einesteils eine möglichst hohe Reaktionsgeschwindigkeit zu erzielen, andererseits jedoch ein Ankleben oder Verklumpen des pulvrigen Produktes zu vermeiden.

Bei diesen Verfahren wird zur Abkürzung der Induktionsperiode und zur Erhöhung der Oxidationsgeschwindigkeit ein Beschleuniger in geringen Mengen von z. B. 0,05 bis 5 Gew.%, bezogen auf das Polyethylen, verwendet. Als Beschleuniger werden entweder organische Peroxide oder Azobisisobutyronitril vorgeschlagen. Hierbei sollen die Peroxide zweckmäßig in einem organischen Lösungsmittel gelöst auf dem Polyethylen verteilt werden. Anschließend wird dann das Lösungsmittel vor der Oxidation abgedampft. Hierbei erzielt man eine gleichmäßige Verteilung des Peroxides im Polyethylen.

Es ist auch aus der Literatur bereits bekannt, Polyethylen hoher Dichte mit Luft in Gegenwart von Ozon zu oxidierten Polyethylenen umzusetzen (vgl. die GB-Patente 951 308, 997 135 und 1 087 914).

Die bekannten Verfahren zur Oxidation von Polyethylen mit Peroxiden als Beschleuniger zeigen den Nachteil, daß nur eine mäßige Beschleunigung der Oxidationsreaktion zu verzeichnen ist. Im Vergleich zu Peroxiden, insbesondere dem Oibenzoylperoxid, wirkt Ozon dem Oxidationsgas, meist Luft, beigemischt, als sehr guter Beschleuniger. Die mit Ozon erhaltenen oxidierten Produkte sind jedoch als Gleitmittel für die Extrusion von Polyvinylchlorid nicht geeignet, da deren Thermostabilität nicht ausreicht. Außerdem verklebt die erhaltene Masse zu frühzeitig mit den Walzen.

Aufgabe der vorliegenden Erfindung war es, eine gesteigerte Reaktionsgeschwindigkeit bei der Oxidation des Polyethylens zu erreichen, wobei zugleich eine Verbesserung der Thermostabilität und des Ankleberverhaltens im erhaltenen Oxidationsprodukt resultiert.

Diese Aufgabe wurde durch das eingangs beschriebene Verfahren zur Oxidation von Polyethylen in Gegenwart definierter Mengen einer radikalbildenden organischen Verbindung gelöst, wobei dem Polyethylen erfindungsgemäß pro Stunde ein Oxidationsgas zugeführt wird, das pro Kilogramm Polyethylen 80 bis 300 mg Ozon enthält.

Bevorzugt ist auch ein Verfahren, bei dem sich nach Beendigung der Oxidation bei erhöhter Temperatur eine Vakuumbehandlung anschließt.

Die erhaltenen oxydierten Polyethylene weisen Säurezahlen von 10 bis 40, bevorzugt 10 bis 22 mg KOH/g auf. Die Säurezahlen werden durch Titration in siedendem Xylol mit methanolischer oder butanolischer KOH gegen Phenolphthalein erhalten, wobei 1 g oxidiertes Polyethylen in 100 bis 200 g Xylol gelöst sind und die KOH-Lösung 1/10 normal ist. Die erhaltenen Oxidate stellen gewöhnlich helle temperaturbeständige Wachse mit einem Schmelzbereich von 118 bis 130°C und Schmelzindices, gemessen nach ASTM-D-1238-65T (190°C/2,16 kg), im Bereich von 0,1 bis 7 000 g/10 min dar.

Bei der Oxidation wird ein feinteiliges Polyethylen hoher Dichte eingesetzt. Unter feinteiligem Polyethylen ist hierbei ein körniges, pulvriges oder granulatförmiges Polyethylen mit Teilchengrößen im Bereich von 3 bis 1 000, bevorzugt 300 bis 800 Mikrometer zu verstehen. Das Polyethylen weist eine Dichte von oberhalb 0,935 g/cm$^3$, insbesondere von 0,94 bis 0,97 g/cm$^3$ (nach DIN 53479) auf. Der Erweichungsbereich des eingesetzten Polyethylens liegt oberhalb von 125°C, insbesondere zwischen 127 und 140°C. Das Polyethylen hoher Dichte kann z.B. nach Ziegler-Polymerisationsverfahren oder unter Verwendung von Phillips-Katalysatorsystemen aus Ethylen erhalten worden sein. Geeignete Polyethylene hoher Dichte weisen beispielsweise einen Schmelzindexwert von über 0,01 g/10 min, gemessen nach ASTM-1D-1238-65T bei einer Temperatur von 190°C und einem Auflagegewicht von 2,16 kg, auf.

Die Oxidationstemperaturen liegen unterhalb des Erweichungspunkts des jeweiligen Polyethylens hoher Dichte und oberhalb von 100°C, bevorzugt oberhalb von 120°C, insbesondere 1 bis 2°C unterhalb des jeweiligen Erweichungspunkts des Polyethylens.

Das Oxidationsgas besteht gemäß Stand der Technik aus Luft, einem beliebigen Gemisch aus Luft und Sauerstoff oder aus Sauerstoff.

Dem Polyethylen sollen 0,015 bis 0,5, bevorzugt 0,02 bis 0,06 Gew.%, bezogen auf das Polyethylen, einer radikalbildenden organischen Verbindung beigemischt sein. Hierzu wird bevorzugt die radikalbildende Substanz in fester, aber fein verteilter Form zu Beginn der Oxidation dem Polyolefin untergemischt. Die radikalbildende Verbindung kann aber auch, wie allgemein üblich, mit einem Lösungsmittel in das Polyethylen aufgebracht werden. Unter radikalbildenden organischen Verbindungen sollen bei Zimmertemperatur feste organische Peroxide wie Di-tert.-butylperoxid, Dibenzoylperoxid, Dilauroylperoxid oder Tert.-butylperbenzoat oder das Azobisisobutyronitril verstanden werden. Bevorzugte Verbindungen sind das Dibenzoyl- oder das Dilauroylperoxid. Im erfindungsgemäßen Sinne sollen die Radikalbildner innerhalb der Zeitdauer der Oxidationsbehandlung bei Temperaturen unterhalb der Erweichungstemperatur des Polyethylens hoher Dichte in Radikale zerfallen.

Bei der Oxidation soll das Oxidationsgas kontinuierlich dem Polyethylen zugeführt werden. Hierzu können als Kontaktapparate beispielsweise Luftumwälzöfen, Wirbelschichtapparaturen, heiße Fließbetten, rotierende Trommeln oder Schaufeltrockner dienen.

Man leitet am besten die Reaktion so, daß nahe am Erweichungspunkt des Polyolefins gearbeitet wird, denn dort ist die Oxidationsgeschwindigkeit am größten, ehe Verklumpung eintritt. Ein Schaufeltrockner ist für diese Art der Reaktionsführung besonders geeignet, da man hier den Beginn des Erweichens durch einen Anstieg der notwendigen Umwälzenergie bemerkt, was zur Temperaturregelung ausgenützt werden kann. Man kann sich auf diese Weise ein doch nie ganz genau passendes Temperaturprogramm ersparen. Geeignete Schaufeltrockner sind beschrieben in Ullmanns Encyklopädie der technischen Chemie, Verlag Chemie, Weinheim/Berstr., 4. Auflage (1972), Band 2, Seite 714; Kirk-Othmer, Encyclopedia of Chemical Technology, Interscience Publishers New York, 2nd Edition (1965), Vol. 7, Seiten 370 bis 371 oder in der Publikation "Grundriß der Technischen Chemie" von F.A. Henglein, Verlag Chemie Weinheim/Bergstr., 11. Auflage (1963), Seiten 114 bis 115.

Erfindungsgemäß soll pro Stunde ein Oxidationsgas dem Polyethylen zugeführt werden, das pro Kilogramm Polyethylen 80 bis 300, insbesondere 50 bis 150 mg Ozon enthält Die Konzentration von Ozon in dem Oxidationsgas, d.h. in der gegebenenfalls durch Sauerstoff angereicherten Luft oder in Sauerstoff ist nicht sehr wesentlich, da das Ozon weitgehend wegreagiert. Übliche Werte schwanken zwischen 2 und 6 g/m³. Die Mengen der beiden Oxidationsbeschleuniger - z.B. organisches Peroxid und Ozon - sollten nicht in beliebigen Grenzen gewählt werden, es führen vielmehr nur die erfindungsgemäß angegebenen Verhältnisse der beiden Verbindungen zum Erfolg.

Die mit der Erfindung erzielten Vorteile sind insbesondere darin zu sehen, daß die Kombination von radikalbildender organischer Verbindung, insbesondere Dibenzoyl- oder Dilauroylperoxid, und Ozon eine gesteigerte Reaktionsgeschwindigkeit und zugleich eine Verbesserung der Thermostabilität und des Anklebeverhaltens des oxidierten Polyethylens bringt.

Nach beendeter Oxidation wird vorzugsweise bei erhöhter Temperatur eine Vakuumbehandlung des oxidierten Polyethylens angeschlossen. Deren Dauer kann zwischen 0,5 und 2 Stunden sein. Der Unterdruck liegt zweckmäßig zwischen 10 und 40 mbar, bevorzugt zwischen 15 und 30 mbar.

Die Prüfung der Polyethylenoxidate auf ihre Eignung als Trenn- bzw. Gleitmittel fur Polyvinylchlorid (PVC) wurde folgendermaßen durchgeführt, wobei sich die Angaben in Teilen jeweils auf das Gewicht beziehen. Eine Mischung aus
100 Teilen Suspensions-PVC (RVinoflex S 6115)
1,2 Teilen eines organischen Zinnstabilisators und
0,3 Teilen Polyethylenoxidat
werden in einem Mischwalzenwerk bei 200 °C homogenisiert. Dieses besteht aus zwei Walzen mit einem Durchmesser von jeweils 150 mm, die beide mit einer Umdrehungszahl von 32 U/min laufen. Die Spaltbreite beträgt gleichmäßig 0,3 mm.

Es wird gemessen:
1.
Die Zeit bis zur Verfärbung von gelb auf braun und
2.
Die Zeit, bis das PVC auf der ganzen Walzenfläche anklebt.

Zur Bestimmung der Farbe wird aus der Folie, die aus dem Spalt austritt und immer wieder zurück aufgegeben wird, eine kleine Scheibe ausgestanzt und die Farbe untersucht.

Vergleichsversuch A

In einen Glaskolben von 2 Liter (1) Inhalt werden 600 g eines feinkörnigen Polyethylens der Dichte 0,945 g/cm³ gegeben. Der Kolben wird horizontal mittels eines Gerätes zur Rotationsverdampfung so gelagert, daß er zur Hälfte in ein Wärmebad eintaucht. Das Öl des Bades wird auf 128 °C aufgeheizt und der Kolben in Rotation versetzt, so daß die Umwälzung des Oxidationsgutes bei einer Drehzahl von etwa 40 - 60 U/min erfolgt. Durch ein Rohr werden 50 1/Stunde Luft und 8 1/Stunde Sauerstoff, die 100 mg/Stunde Ozon enthalten, in den Kolben geleitet. Nach 16 Stunden ist eine Säurezahl von 15 erreicht. Während dieser Zeit wird die Temperatur von anfänglich 128 °C auf 125 °C am Ende der Oxidation zurückgenommen.

Anschließend wird noch zwei Stunden bei 125

° C und bei einem Vakuum von ca. 26 mbar getrocknet.

Bei der Gleitmittelprüfung ergab sich eine Thermostabilität von 11 - 12 min bei 200 ° C und ein Ankleben nach 13 min bei 200 ° C.

**Vergleichsversuch B**

Der Versuch gemäß Vergleichsversuch A wurde wiederholt, nur mit dem Unterschied, daß kein Ozon eingeleitet worden ist und dafür 150 mg Dibenzoylperoxid in feinverteilter, fester Form vor Beginn der Oxidation dem feinkörnigen Polyethylen zugemischt worden waren. Die Reaktion dauerte hier 22 Stunden, bis eine Säurezahl von 15 erreicht werden konnte.

Nach der Vakuumbehandlung ergaben sich folgende Werte bei der Gleitmittelprüfung:
Thermostabilität: 10 min bei 200 ° C
Ankleben: nach 15 min bei 200 ° C

**Beispiel 1**

Der Versuch gemäß Vergleichsversuch A wurde wiederholt, nur mit dem Unterschied, daß zusätzlich zur Ozoneinleitung noch vor Beginn der Oxidation wie in Vergleichsversuch B 150 mg Dibenzoylperoxid zugegeben worden waren. Die Reaktion dauerte hier 15 Stunden, bis eine Säurezahl von 15 erreicht werden konnte.

Nach der Vakuumbehandlung ergaben sich folgende Werte bei der Gleitmittelprüfung:
Thermostabilität: 11 - 12 min bei 200 ° C
Ankleben: über 16 min bei 200 ° C

**Vergleichsversuch B'**

Der Versuch von Beispiel 1 wurde wiederholt, jedoch mit 300 mg Ozon je Stunde und 150 mg Dibenzoylperoxid wie in Beispiel 1. Die Reaktion dauerte hier nur 10 Stunden, bis eine Säurezahl von 15 erreicht wurde.

Nach der Vakuumbehandlung ergaben sich folgende Werte bei der Gleitmittelprüfung:
Thermostabilität: 11 min bei 200 ° C
Ankleben: über 16 min bei 200 ° C

**Vergleichsversuch C**

Vergleichsversuch B wurde wiederholt, nur mit dem Unterschied, daß anstelle von 150 mg Dibenzoylperoxid 300 mg desselben eingesetzt wurden. Die notwendige Reaktionszeit war 20 Stunden, bis eine Säurezahl von 15 erreicht werden konnte.

Nach der Vakuumbehandlung ergaben sich folgende Werte bei der Gleitmittelprüfung:
Thermostabilität: 11 min bei 200 ° C
Ankleben: nach 15 min bei 200 ° C

**Beispiel 3**

Vergleichsversuch C wurde wiederholt, nur mit dem Unterschied, daß noch wie im Vergleichsversuch A zusätzlich 100 mg Ozon pro Stunde eingeleitet wurden. Die Reaktion dauerte hier 15 Stunden bis zur gewünschten Säurezahl von 15.

Nach der Vakuumbehandlung ergaben sich folgende Werte bei der Gleitmittelprüfung:
Thermostabilität: 11 - 12 min bei 200 ° C
Ankleben: über 16 min bei 200 ° C

**Beispiel 4**

In einem Schaufeltrockner von 160 1 Inhalt werden 44 kg eines Polyethylens der Dichte 0,945 g/cm$^3$ in Pulverform und 22 g Dibenzoylperoxid unter Umwälzen erhitzt. Die Drehzahl der Rührwelle liegt bei 30 - 40 U/min. Zuerst wird dazu eine Manteltemperatur von 130 ° C angelegt. Wenn das zu oxidierende Produkt eine Temperatur von 128 ° C aufweist, werden in den Raum 2,8 Nm$^3$ Luft und 0,8 Nm$^3$ Sauerstoff je Stunde gleichzeitig eingeleitet. Dieses Gasgemisch enthält 2,27 g/Nm$^3$ Ozon. Die Temperatur des Oxidationsgutes wird durch die Messung der Leistungsaufnahme des Rührwerkmotors so gesteuert, daß man gerade unterhalb des Erweichungspunktes arbeitet, Dieser sinkt von 128 ° C bis 120 ° C während der Oxidation ab. Nach 14 Stunden ist eine Säurezahl von 16 erreicht.

Nach einer Vakuumbehandlung von 1/2 Stunde Dauer ergeben sich folgende Werte für die Gleitmittelprüfung:
Thermostabilität: 14 min bei 200 ° C
Ankleben: über 16 min bei 200 ° C

**Patentansprüche**

1. Verfahren zur Herstellung von oxidierten Polyethylenen mit Säurezahlen von 10 bis 40 mg KOH/g durch Oxidation von feinteiligem Polyethylen hoher Dichte bei Temperaturen unterhalb des Erweichungspunkts des Polyethylens und oberhalb 100° C mit einem Oxidationsgas aus Luft und/oder Sauerstoff, wobei Polyethylene eingesetzt werden, denen 0,015 bis 0,5 Gew.-% einer radikalbildenden organischen Verbindung beigemischt sind, dadurch gekennzeichnet, daß dem Polyethylen pro Stunde ein Oxidationsgas zugeführt wird, das pro Kilogramm Polyethylen 80 bis 300 mg Ozon enthält.

2. Verfahren nach Anspruch 1, dadurch gekennzeichnet, daß sich nach Beendigung der Oxidation bei erhöhter Temperatur eine Vakuumbehandlung des oxidierten Polyethylens anschließt.

3. Verwendung der nach den Verfahren gemäß den Ansprüchen 1 oder 2 erhaltenen oxidierten Polyethylene als Gleitmittel bei der Extrusion von Polyvinylchlorid.

**Claims**

1. A process for preparing an oxidized polyethylene having an acid number of from 10 to 40 mg of KOH/g by oxidation of a finely divided polyethylene of high density at below the softening point of the polyethylene and above $100°C$ with an oxidation gas of air and/or oxygen, the polyethylene used containing from 0.015 to 0.5% by weight of a free radical former organic compound in admixture, which comprises contacting the polyethylene per hour with an oxidation gas which per kilogram of polyethylene contains from 80 to 300 mg of ozone.

2. A process as claimed in claim 1, wherein the oxidation is followed at elevated temperatures by a reduced pressure treatment of the oxidized polyethylene.

3. Use of the oxidized polyethylene obtained by the process as claimed in claim 1 or 2, as lubricant in the extrusion of polyvinyl chloride.

**Revendications**

1. Procédé de preparation de polyéthylènes oxydés ayant des indices d'acide de 10 à 40 mg KOH/g, par oxydation de polyéthylène haute densité finement divisé, à des températures inférieures au point de ramollissement du polyéthylène et supérieures à $100°C$, avec un gaz oxydant composé d'air et/ou d'oxygène, avec utilisation de polyéthylènes qui sont additionnés de 0,015 à 0,5% en poids d'un composé organique générateur de radicaux, caractérisé en ce qu'il est envoyé par heure, dans le polyéthylène, un gaz oxydant qui contient de 80 à 300 mg d'ozone par kilogramme.

2. Procédé selon la revendication 1, caractérisé en ce qu'un traitement dans le vide du polyéthylène oxydé à température élevée fait suite à l'achèvement de l'oxydation.

3. Utilisation des polyéthylènes oxydés, obtenus par le procédé selon la revendication 1 ou 2, comme lubrifiant dans l'extrusion de chlorure de polyvinyle.